# EUROPÄISCHE PATENTSCHRIFT

(11) **EP 4 233 031 B1**
(45) Veröffentlichungstag und Bekanntmachung des Hinweises auf die Patenterteilung: **03.12.2025**
(21) Anmeldenummer: 21798312.1
(22) Anmeldetag: 18.10.2021
(51) Int. Cl.: G08G 1/097, G07C 5/00, G07C 5/08, G08G 1/04, G05D 1/00, B60W 60/00, B60W 50/02

(54) **VERFAHREN ZUM ÜBERWACHEN EINER SENSORIK EINES FAHRZEUGS MITTELS ZUHILFENAHME EINER INFRASTRUKTURANLAGE**
METHOD FOR MONITORING A SENSOR SYSTEM OF A VEHICLE WITH THE AID OF AN INFRASTRUCTURE SYSTEM
PROCÉDÉ DE SURVEILLANCE D'UN SYSTÈME DE DÉTECTION D'UN VÉHICULE À L'AIDE D'UN SYSTÈME D'INFRASTRUCTURE

(30) Priorität: 20.10.2020 DE 102020006460
(43) Veröffentlichungstag der Anmeldung: 30.08.2023
(73) Patentinhaber: Jenoptik Robot GmbH, 40789 Monheim (DE)
(72) Erfinder: FENDT, Günter, 86529 Schrobenhausen (DE)
(74) Vertreter: Waldauf, Alexander
(86) Internationale Anmeldenummer: PCT/EP2021/078785
(87) Internationale Veröffentlichungsnummer: WO 2022/084239

(56) Entgegenhaltungen:
- DE-A1- 102009 045 709
- DE-A1- 102011 084 264
- DE-A1- 102015 016 888
- DE-A1- 102015 219 933
- DE-A1- 102018 101 110

## Beschreibung

Die Erfindung bezieht sich auf ein Verfahren zum Überwachen einer Sensorik (insbesondere als Kamera ausgebildet) eines Fahrzeugs mittels Zuhilfenahme einer Infrastrukturanlage, sowie eine Infrastrukturanlage und ein Kraftfahrzeug.

Assistenzsysteme mit optischen Umgebungsüberwachungsfunktionen (Kameras) erlangen eine immer höhere Markdurchdringung, da diese neben einem Sicherheitsgewinn auch einen Komfortzuwachs für den Fahrzeugführer bedeuten.

So sind beispielsweise Spurhalteassistenten bekannt, welche den Fahrzeugführer warnen, wenn die Gefahr besteht, dass das Fahrzeug von der Spur abkommt.

Primär werden Kameras in Fahrtrichtung ausgerichtet, wobei auch nach hinten gerichtete Kameras (Rückfahrkamera) zum Einsatz kommen.

Das Thema "autonome Fahrzeugführung", bzw. "pilotiertes Fahren" (automatische Fahrzeugführung) beschreibt einen Mega-Trend in der Kfz-Industrie, an diesem die Fachwelt mit Nachdruck arbeitet.

Die DE 10 2018 101 110 A1 beschreibt Techniken und Beispiele in Bezug auf Fahrzeugsensorzustandsüberwachungen bei autonom fahrenden Fahrzeugen.

Ein wesentlicher Baustein, bzw. wesentliche Komponenten für die automatische Fahrzeugführung sind hierbei die umgebungserfassenden Systeme, insbesondere Kamerasysteme, mittels diesen
a) sowohl die umgebende Verkehrssituation,
b) wie auch die eigene Position auf der Fahrbahn,
erfasst wird/werden.

Mit anderen Worten:
Für einen autonomen Fahrbetrieb ist eine 100%ige Funktionalität / 100%ige Funktionsfähigkeit der umgebungserfassenden Systeme, insbesondere Kamerasysteme, unerlässlich.

### Beispiel:

Hätte eine Kamera einen Justagefehler ("Blick" ca. 50 cm zu weit nach rechts), so würde als Folge davon das Fahrzeug aufgrund dieses Justagefehlers im autonomen Fahrbetrieb nicht mehr in der vorgesehenen Fahrbahnmitte ("b/2") fahren, sondern um den Betrag (ca. 50 cm nach links) versetzt, wobei der Versatz infolge des Justagefehlers verursacht wird.

Mit anderen Worten:
Der Justagefehler würde vom Assistenzsystem dadurch kompensiert werden, indem das Assistenzsystem das Fahrzeug solange in die andere Richtung steuert, bis das Assistenzsystem "erkennt", dass das Fahrzeug wieder "mittig" ("b/2") in der vorgesehenen Fahrbahntrajektorie ist.

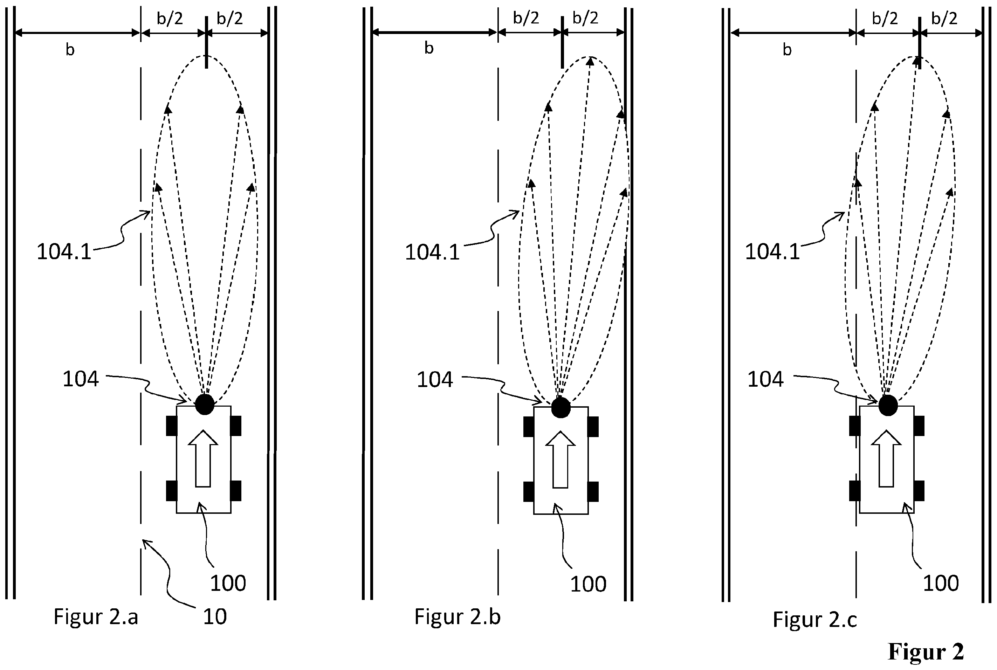

Zum leichteren Verständnis bitte die Figur 2 betrachten.

(Die Abweichung ist nicht maßstabsgetreu - im Prinzip schadet bereits ein Winkelfehler von 1 Grad).

Der Begriff "Justagefehler" ist als Sammelbegriff zu verstehen, bzw. unter dem Begriff "Justagefehler" sind im Lichte der Erfindung alle die Fehler zu verstehen, welche dazu führen, dass der Erfassungsbereich des Umgebungserfassungssystems (optische Achse) nicht mehr in der ursprünglich gemäß Systemkonstruktion vorgesehenen Ausrichtung verläuft (von der ursprünglich gemäß Systemkonstruktion vorgesehenen Ausrichtung abweichen ist).

Wie die später folgenden Beispiele / Figuren zeigen, wäre es fatal, bzw. hätte es fatale Folgen, wenn das Fahrzeug infolge eines ausgebildeten Justagefehlers und/oder ein "schleichender" Justagefehlers, versetzt in der dafür vorgesehenen Fahrspur bewegt wird / werden würde.

Daher gilt es, dass die in Fahrzeugen eingesetzte/n Sensorik, bzw. Sensoriken, deren korrekte Funktion sicherzustellen ist.

Die DE 10 2016 000 532 A1 schlägt dazu eine Kalibrierung einer Einrichtung eines Fahrzeugs, beispielsweise eines Tachometers, unter Verwendung eines Verkehrsüberwachungsgeräts vor.

Aus der Schrift DE 10 2018 106 594 A1 ist ein Verfahren zum Überwachen und/oder Detektieren einer Sensorik eines Fahrzeugs bekannt, wobei dieses Verfahren einen Schritt des Ermittelns eines Parameterwerts unter Verwendung eines Antwortsignals, und einen Schritt des Bestimmens eines der Sensorik zuordenbaren Überwachungssignals unter Verwendung des Parameterwerts und eines vorbestimmten Reaktionswerts umfasst.

Wie aus der Schrift DE 10 2018 106 594 A1 weiter offenbart wird, kann das Verfahren einen Schritt des Aussendens umfassen, in dem zumindest ein das Anregungsereignis bewirkendes Signal unter Verwendung des Anregungssignals ausgesendet wird. Bei einem solchen Signal kann es sich um ein akustisches und/oder ein elektromagnetisches Signal handeln. Zum Aussenden eines solchen Signals kann eine geeignete Sendeeinrichtung, beispielsweise eine Lichtquelle verwendet werden. Auf diese Weise kann das Anregungsereignis sehr schnell und einfach hervorgerufen werden. Beispielsweise kann im Schritt des Aussendens als das elektromagnetische Signal ein Lichtimpuls in Richtung des Fahrzeugs ausgesendet werden. Ein solcher Lichtimpuls kann beispielsweise ein entgegenkommendes Fahrzeug simulieren, sodass die Antwortreaktion eine Reaktion einer adaptiven Fahrzeugbeleuchtung des Fahrzeugs sein kann. Auch kann als das elektromagnetische Signal ein im Vorfeld des Fahrzeugs erscheinender Lichtvorhang oder Strahlungswellenvorhang ausgesendet werden. Dazu kann beispielsweise ein Laser unter Verwendung des Anregungssignals geeignet angesteuert werden. Auf diese Weise kann ein sich im Vorfeld des Fahrzeugs befindliches Hindernis simuliert werden, sodass die Antwortreaktion ein Bremsmanöver oder ein Lenkmanöver des Fahrzeugs sein kann.

Hinsichtlich einer Prüfmethode bzw. Überwachungsverfahrens zur Erkennung eines ausgebildeten Justagefehlers an einer Sensorik und/oder eines "schleichenden" Justagefehlers an einer Sensorik ist aus dem allgemeinen Stand der Technik nur wenig bekannt, bzw. bleibt der Betrachter bzgl. einer konkreten Realisierung im Dunkeln.

### Aufgabe der Erfindung:

Die Aufgabe der Erfindung kann darin gesehen werden, dass ein ausgebildeter Justagefehler an einer Sensorik und/oder ein "schleichender" Justagefehler an einer Sensorik zu keiner Gefährdung führt, bzw. bei der Überprüfung sicher erkannt wird.

### Lösung der Erfindung:

Diese Aufgabe wird durch ein Verfahren nach den Ansprüchen 1 oder 2 und eine Vorrichtung nach den Ansprüchen 9 oder 10 gelöst. Vorteilhafte Weiterbildungen sind in den abhängigen Ansprüchen angegeben.

### Beschreibung der Erfindung:

Um eine weitere Optimierung auf dem Gebiet zum Überwachen einer Sensorik eines Fahrzeugs mittels Zuhilfenahme einer Infrastrukturanlage zu erlangen, wird ein Verfahren vorgeschlagen, wobei das Verfahren seitens der Infrastrukturanlage mindestens die folgenden Schritte umfasst:
a) Ermitteln einer Position des Fahrzeugs, relativ zum aktuell befahrenen Fahrstreifen einer mehrspurigen Fahrbahn, mittels Zuhilfenahme von Mitteln der Infrastrukturanlage; und
b) Empfangen einer Positionsinformation des Fahrzeugs vom Fahrzeug oder von einer Komponente des Fahrzeugs, basierend auf der Sensorik des Fahrzeugs, welche die ermittelte Position des Fahrzeugs relativ zum aktuell befahrenen Fahrstreifen einer mehrspurigen Fahrbahn beschreibt; und
c) Bestimmen einer möglichen Abweichung der Position des Fahrzeugs, durch vergleichende Auswertung
   - der ermittelten Position des Fahrzeugs mittels Mitteln der Infrastrukturanlage, gegenüber
   - der ermittelten Position des Fahrzeugs mittels der Sensorik des Fahrzeugs;
d) wobei im Schritt des Bestimmens einer möglichen Abweichung der Position des Fahrzeugs, im Falle einer Erkennung einer Abweichung größer eines vorgegebenen und/oder vorgebbaren Wertes,
   - als Reaktion bei einer Abweichung größer eines vorgegebenen und/oder vorgebbaren Wertes,
   - eine Warninformation von der Infrastrukturanlage an das Fahrzeug gesendet wird.

Erfindungsgemäß wird weiter als Alternative hierfür, um eine weitere Optimierung auf dem Gebiet zum Überwachen einer Sensorik eines Fahrzeugs mittels Zuhilfenahme einer Infrastrukturanlage zu erlangen, ein Verfahren vorgeschlagen, wobei das Verfahren seitens des Fahrzeugs mindestens die folgenden Schritte umfasst:
a) Ermitteln einer Position des Fahrzeugs, relativ zum aktuell befahrenen Fahrstreifen einer mehrspurigen Fahrbahn, mittels der Sensorik des Fahrzeugs; und
b) Empfangen einer Positionsinformation des Fahrzeugs von der Infrastrukturanlage, basierend mittels Zuhilfenahme von Mitteln der Infrastrukturanlage, welche die ermittelte Position des Fahrzeugs relativ zum aktuell befahrenen Fahrstreifen einer mehrspurigen Fahrbahn beschreibt; und
c) Bestimmen einer möglichen Abweichung der Position des Fahrzeugs, durch vergleichende Auswertung
   - der ermittelten Position des Fahrzeugs mittels Mitteln der Infrastrukturanlage, gegenüber
   - der ermittelten Position des Fahrzeugs mittels der Sensorik des Fahrzeugs;
d) wobei im Schritt des Bestimmens einer möglichen Abweichung der Position des Fahrzeugs, im Falle einer Erkennung einer Abweichung größer eines vorgegebenen und/oder vorgebbaren Wertes,
   - als Reaktion bei einer Abweichung größer eines vorgegebenen und/oder vorgebbaren Wertes,
   - eine Warninformation im Fahrzeug generiert wird.

In einer weiteren vorteilhaften Ausführungsform der Erfindung, zeichnet sich das Verfahren zum Überwachen einer Sensorik eines Fahrzeugs mittels Zuhilfenahme einer Infrastrukturanlage dadurch aus, dass im Schritt des Bestimmens einer möglichen Abweichung der Position des Fahrzeugs, hinsichtlich der Abweichung größer eines vorgegebenen und/oder vorgebbaren Wertes, der Betrag des vorgegebenen und/oder vorgebbaren Wertes mittels einer Funktion von der Breite des aktuell befahrenen Fahrstreifens einer mehrspurigen Fahrbahn gebildet wird.

In einer weiteren vorteilhaften Ausführungsform der Erfindung, zeichnet sich das Verfahren zum Überwachen einer Sensorik eines Fahrzeugs mittels Zuhilfenahme einer Infrastrukturanlage dadurch aus, dass im Schritt des Bestimmens einer möglichen Abweichung der Position des Fahrzeugs, hinsichtlich der Abweichung größer eines vorgegebenen und/oder vorgebbaren Wertes, der Betrag des vorgegebenen und/oder vorgebbaren Wertes mittels einer Funktion von der aktuellen Geschwindigkeit des Fahrzeugs gebildet wird.

In einer weiteren vorteilhaften Ausführungsform der Erfindung, zeichnet sich das Verfahren zum Überwachen einer Sensorik eines Fahrzeugs mittels Zuhilfenahme einer Infrastrukturanlage dadurch aus, dass im Schritt des Bestimmens einer möglichen Abweichung der Position des Fahrzeugs, hinsichtlich der Abweichung größer eines vorgegebenen und/oder vorgebbaren Wertes, der Betrag des vorgegebenen und/oder vorgebbaren Wertes mittels einer Funktion von dem aktuellen Verkehrsaufkommen des aktuell befahrenen Fahrstreifens und dessen angrenzenden Fahrstreifen einer mehrspurigen Fahrbahn gebildet wird.

In einer weiteren vorteilhaften Ausführungsform der Erfindung, zeichnet sich das Verfahren zum Überwachen einer Sensorik eines Fahrzeugs mittels Zuhilfenahme einer Infrastrukturanlage dadurch aus, dass im Schritt des Bestimmens einer möglichen Abweichung der Position des Fahrzeugs, hinsichtlich der Abweichung größer eines vorgegebenen und/oder vorgebbaren Wertes, der Betrag des vorgegebenen und/oder vorgebbaren Wertes mittels einer Funktion von der aktuellen witterungsbedingten Gegebenheiten gebildet wird.

In einer weiteren vorteilhaften Ausführungsform der Erfindung, zeichnet sich das Verfahren zum Überwachen einer Sensorik eines Fahrzeugs mittels Zuhilfenahme einer Infrastrukturanlage dadurch aus, dass im Schritt des Bestimmens einer möglichen Abweichung der Position des Fahrzeugs, hinsichtlich der Abweichung größer eines vorgegebenen und/oder vorgebbaren Wertes, der Betrag des vorgegebenen und/oder vorgebbaren Wertes mittels einer Funktion einer Kombination von zwei oder mehreren Merkmalen der (Ansprüche 3 bis 6) oben / zuvor genannten Merkmale gebildet wird.

In einer weiteren vorteilhaften Ausführungsform der Erfindung, zeichnet sich das Verfahren zum Überwachen einer Sensorik eines Fahrzeugs mittels Zuhilfenahme einer Infrastrukturanlage dadurch aus, dass im Schritt des Bestimmens einer möglichen Abweichung der Position des Fahrzeugs, hinsichtlich der Abweichung größer eines vorgegebenen und/oder vorgebbaren Wertes, der Betrag des vorgegebenen und/oder vorgebbaren Wertes, dieser
- als relativer Wert zur Breite des aktuell befahrenen Fahrstreifens einer mehrspurigen Fahrbahn gebildet wird, und/oder
- als absoluter Wert zur Breite des aktuell befahrenen Fahrstreifens einer mehrspurigen Fahrbahn gebildet wird.

Erfindungsgemäß wird weiter eine Infrastrukturanlage vorgeschlagen, wobei die Infrastrukturanlage eines oder mehrere der oben genannte Verfahrens-Merkmale aufweist.

Erfindungsgemäß wird weiter ein Kraftfahrzeug vorgeschlagen, wobei das Kraftfahrzeug eines oder mehrere der oben genannte Verfahrens-Merkmale aufweist (der zum Teil benutzte Ausdruck "Fahrzeug" steht als Synonym für "Kraftfahrzeug").

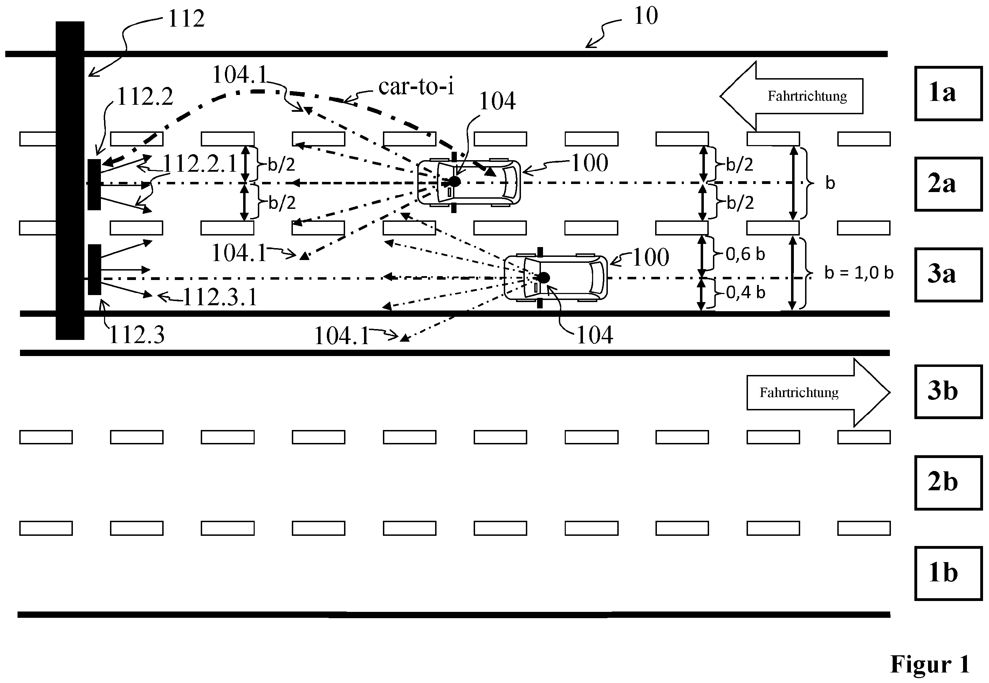

Im Folgenden wird die Erfindung anhand der Figuren 1 bis 5 beispielhaft näher erläutert. Die Figuren und die darin genannten / zu entnehmenden Werteangaben (soweit vorhanden) sind nur beispielhaft und dienen zum leichteren Verständnis.

Alle Figuren sind nur Prinzip-Darstellungen (nicht maßstabsgetreu) .

Es zeigen schematisch:
- Figur 1:: Eine schematische Darstellung eines Verkehrsszenarios bei diesem sich zwei Kraftfahrzeuge einer Infrastrukturanlage nähern;
- Figur 2:: Eine Prinzip-Darstellung eines Fahrzeugs, dass eine Fahrbahn / einen Fahrstreifen befährt, sowie die Folgen einer Fehljustage / einer Fehlausrichtung des Erfassungsbereiches (optischen Achse) des Umgebungserfassungssystems;
- Figur 3:: Eine beispielhafte Darstellung an Verfahrensschritten bzgl. einer vergleichenden Auswertung seitens der Infrastrukturanlage;
- Figur 4:: Eine beispielhafte Darstellung an Verfahrensschritten bzgl. einer vergleichenden Auswertung seitens des Kraftfahrzeuges;
- Figur 5:: Eine schematische Darstellung bezüglich des Betrags des vorgegebenen und/oder vorgebbaren Wertes, welcher mittels einer Auswahl einer Funktion bzw. Kombination an Funktionen gebildet wird.

Die Figur 1 zeigt eine schematische Darstellung eines Verkehrsszenarios bei diesem sich zwei Kraftfahrzeuge (100) einer Infrastrukturanlage (112) nähern. Wie aus der Figur 1 hierzu ersichtlich ist, befindet sich eine Infrastrukturanlage (112) über drei Fahrstreifen (1a, 2a, 3a) einer mehrspurigen Fahrbahn (10). Die Infrastrukturanlage (112) besitzt (z.B. an dieser angebracht / integriert) Mittel (112.2, 112.3) zur Erfassung der Fahrzeuge (100), welche die Fahrstreifen (1a, 2a, 3a) der mehrspurigen Fahrbahn (10) befahren. Aus Gründen der Übersichtlichkeit sind nur zwei Mittel (112.2, 112.3) für die beiden Fahrstreifen (2a, 3a) zur Erfassung der beiden Fahrzeuge (100) auf den beiden Fahrstreifen (2a, 3a) gezeigt, wobei die Erfassungscharakteristik (112.2.1, 112.3.1) der beiden Mittel (112.2, 112.3) nur symbolisch dargestellt sind, da der Erstreckungsbereich / Erfassungsbereich in der Realität deutlich weiter reichend ist / erstreckend ist. Die Mittel (112.2, 112.3) der Infrastrukturanlage (112) sind insbesondere als umgebungserfassende Systeme (Kameras) realisiert. Das Mittel (112.2) der Infrastrukturanlage (112) erfasst das Fahrzeug (100) welches sich auf dem Fahrstreifen (2a) befindet, bzw. den Fahrstreifen (2a) befährt. Das Mittel (112.3) der Infrastrukturanlage (112) erfasst das Fahrzeug (100) welches sich auf dem Fahrstreifen (3a) befindet, bzw. den Fahrstreifen (3a) befährt.

Wie aus der Figur 1 hierzu weiter ersichtlich ist, befindet das Fahrzeug (100), welches den Fahrstreifen (2a) befährt, mittig zum Fahrstreifen (2a), wobei der Fahrstreifen (2a) eine Breite (b) aufweist. Als Ergebnis hiervon resultiert, dass das Mittel (112.2) der Infrastrukturanlage (112) das Fahrzeug (100) auf dem Fahrstreifen (2a) derart erfasst, dass dies mittig (b/2, b/2) zum Fahrstreifen (2a) sich befindet.

Wie aus der Figur 1 hierzu weiter ersichtlich ist, befindet das Fahrzeug (100), welches den Fahrstreifen (3a) befährt, nicht mittig zum Fahrstreifen (3a), wobei der Fahrstreifen (3a) eine Breite (b) aufweist. Das Fahrzeug (100) befährt den Fahrstreifen (3a) mit einem Versatz, wobei der Versatz innerhalb der Fahrstreifenbreite (b) ein Verhältnis von 0,4 b zu 0,6 b bildet. Als Ergebnis hiervon resultiert, dass das Mittel (112.3) der Infrastrukturanlage (112) das Fahrzeug (100) auf dem Fahrstreifen (3a) derart erfasst, dass dies nicht mittig (b/2, b/2), sondern 40% und 60% (0,4 b zu 0,6 b) zum Fahrstreifen (3a) sich befindet.

Wie aus der Figur 1 weiter ersichtlich ist, weisen beide Fahrzeuge (100) je eine Sensorik (104) auf, welche je eine in Fahrtrichtung weisende Erfassungscharakteristik (104.1) aufweisen.

Wie aus der Figur 1 hierzu weiter ersichtlich ist, befindet das Fahrzeug (100), welches den Fahrstreifen (2a) befährt, mittig zum Fahrstreifen (2a), wobei der Fahrstreifen (2a) eine Breite (b) aufweist. Als Ergebnis hiervon resultiert, dass die Sensorik (104) des Fahrzeugs auf dem Fahrstreifen (2a) das Fahrzeug (100) relativ zum Fahrstreifen (2a) derart erfasst, dass dies mittig (b/2, b/2) zum Fahrstreifen (2a) sich befindet.

Wie aus der Figur 1 hierzu weiter ersichtlich ist, befindet das Fahrzeug (100), welches den Fahrstreifen (3a) befährt, nicht mittig zum Fahrstreifen (3a), wobei der Fahrstreifen (3a) eine Breite (b) aufweist. Das Fahrzeug (100) befährt den Fahrstreifen (3a) mit einem Versatz, wobei der Versatz innerhalb der Fahrstreifenbreite (b) ein Verhältnis von 0,4 b zu 0,6 b bildet. Als Ergebnis hiervon resultiert, dass die Sensorik (104) des Fahrzeugs auf dem Fahrstreifen (3a) das Fahrzeug (100) relativ zum Fahrstreifen (3a) derart erfasst, dass dies nicht mittig (b/2, b/2), sondern 40% und 60% (0,4 b zu 0,6 b) zum Fahrstreifen (3a) sich befindet.

Bei einer nachfolgenden vergleichenden Auswertung der ermittelten Positionen des Fahrzeugs (100) eines jeweiligen Fahrstreifens (2a, 3a), mit dem Ziel der Überwachung einer Sensorik (104) eines Fahrzeugs (100) mittels Zuhilfenahme einer Infrastrukturanlage (112), werden die korrelierenden Ergebnisse (eines bestimmten Fahrstreifens betreffend) miteinander verglichen, indem ein Vergleich erfolgt zwischen
- der ermittelten Position des Fahrzeugs (100) mittels Mitteln (112.2, 112.3) der Infrastrukturanlage (112), gegenüber
- der ermittelten Position des Fahrzeugs (100) mittels der Sensorik (104) des Fahrzeugs (100).

Wie aus der Figur 1 weiter ersichtlich ist, ist das Kraftfahrzeug (100) / sind die Kraftfahrzeuge (100), wie auch die Infrastrukturanlage (112), bzw. Mittel (112.2, 112.3) der Infrastrukturanlage (112) derart realisiert, dass eine Car-to-Infrastruktur-Kommunikation (car-to-i) möglich ist, damit die in den einzelnen Messungen zur Fahrzeugpositionsbestimmung ermittelten Ergebnisse, untereinander ausgetauscht werden können, damit der entsprechende Vergleich (Abgleich) entweder infrastrukturseitig oder fahrzeugseitig erfolgen kann.

Die Figur 2 zeigt eine Prinzip-Darstellung eines Fahrzeugs (100), dass eine Fahrbahn (10) / einen Fahrstreifen befährt, sowie die Folgen einer Fehljustage / einer Fehlausrichtung des Erfassungsbereiches (optischen Achse) des Umgebungserfassungssystems / der Sensorik (104), welcher sich Infolge eines Justagefehlers einstellen würde.

Die Figur 2a zeigt die Sensorik (104) am Fahrzeug (100) befindend, in ordnungsgemäßer Funktionsweise, bzw. der Erfassungsbereich (104.1) in korrekter Art nach vorne ausgerichtet. Das Fahrzeug (100) fährt in der Mitte (b/2) des dafür vorgesehenen Fahrstreifens der mehrspurigen Fahrbahn (10), welche zwei Fahrstreifen mit je der Breite (b) enthält. Das Umgebungserfassungssystem / die Sensorik (104) erkennt, dass sich das Fahrzeug (100), bzw. die Position des Fahrzeugs (100), in der Mitte (b/2) des vorgesehenen Fahrstreifens mit der Breite (b) befindet.

Die Figur 2b zeigt die Sensorik (104) analog zur Figur 2a, jedoch mit einem angenommenen Justagefehler. Das Fahrzeug (100) fährt in der Mitte (b/2) des dafür vorgesehenen Fahrstreifens der mehrspurigen Fahrbahn (10), welche zwei Fahrstreifen mit je der Breite (b) enthält. Aufgrund des gezeigten Justagefehlers erkennt die Sensorik (104), dass sich das Fahrzeug (100), bzw. die Position des Fahrzeugs (100), offensichtlich NICHT in der Mitte (b/2) des vorgesehenen Fahrstreifens befindet, da die Sensorik (104), bzw. aus dessen Bildauswertung der Rückschluss gezogen wird, dass sich das Fahrzeug (100) angeblich etwas nach rechts versetzt befindet.

Die Figur 2c zeigt die Sensorik (104), mit einem angenommenen Justagefehler gemäß Fig. 2b, wobei sich das Fahrzeug (100) leicht nach links versetzt zur Mitte (b/2) des vorgesehenen Fahrstreifens befindet. Dieser Versatz würde von einem automatischen Spurhalteassistenzsystem mit einer Sensorik (104) angestrebt werden, damit das Spurhalteassistenzsystem mit einer Sensorik (104) erkennt, dass das Fahrzeug (100), bzw. die Position des Fahrzeugs (100), sich "korrekt" in der Mitte (b/2) des vorgesehenen Fahrstreifens befindet (was natürlich falsch ist).

Im Falle eines Justagefehlers der Sensorik (104), wie in Figur 2b gezeigt, würde der Vergleich der ermittelten Fahrzeugpositionen keine Übereinstimmung ergeben, bzw. dies zu einer Warnmeldung führen, da die Positionsbestimmung durch die Sensorik (104) im Fahrzeug (100) eine Position ergeben würde, bei dieser sich das Fahrzeug (100) angeblich nicht mittig (b/2) zum Fahrstreifen befindet, wohingegen die Mittel (112.2, 112.3) der Infrastrukturanlage (112) eine Position ergeben würde, bei dieser sich das Fahrzeug (100) mittig (b/2) zum Fahrstreifen befindet, und somit der Vergleich zu keiner Übereinstimmung führt, bzw. zu einer (größeren) Abweichung führt.

Im Falle eines Justagefehlers der Sensorik (104), wie in Figur 2c gezeigt, würde (analog zur Figur 2b) der Vergleich der ermittelten Fahrzeugpositionen keine Übereinstimmung ergeben, bzw. dies zu einer Warnmeldung führen, da die Positionsbestimmung durch die Sensorik (104) im Fahrzeug (100) eine Position ergeben würde, bei dieser sich das Fahrzeug (100) angeblich mittig (b/2) zum Fahrstreifen befindet, wohingegen die Mittel (112.2, 112.3) der Infrastrukturanlage (112) eine Position ergeben würde, bei dieser sich das Fahrzeug (100) nicht mittig (b/2) zum Fahrstreifen befindet, und somit der Vergleich zu keiner Übereinstimmung führt, bzw. zu einer (größeren) Abweichung führt.

Die Ausdrucksweise "relativ zum aktuell befahrenen Fahrstreifen" ist im Lichte der Erfindung derart zu verstehen, dass die Position des Fahrzeugs (100) in Bezug zum Fahrstreifen mit der Breite (b) der mehrspurigen Fahrbahn (10) beschrieben wird, wobei die möglichen Abweichung (a) der Position des Fahrzeugs (100) als Differenz zwischen den beiden zu vergleichenden korrelierenden Messungen (Sensorik (104) gegenüber Mitteln (112.2, 112.3) der Infrastrukturanlage (112)) dargestellt werden kann (gebildet werden kann), sowohl
- als relativer Wert (xx %) zur Breite (b) des aktuell befahrenen Fahrstreifens (1a, 2a, 3a, 1b, 2b, 3b) einer mehrspurigen Fahrbahn (10), und/oder
- als absoluter Wert (xx cm) zur Breite (b) des aktuell befahrenen Fahrstreifens (1a, 2a, 3a, 1b, 2b, 3b) einer mehrspurigen Fahrbahn (10).

Zur Vermeidung von Messfehlern versteht es sich in selbstverständlicher Art, dass bei den Positionsbestimmungen durch die einzelnen Messsysteme (Sensorik (104) im Fahrzeug (100), und den Mitteln (112.2, 112.3) der Infrastrukturanlage (112)) eine zeitliche Synchronisation der Positionsbestimmung stattfindet, bzw. angestrebt wird, wobei die Synchronisation beispielsweise durch die Car-to-Infrastruktur-Kommunikation, und/oder bei einem definierten Abstand zwischen dem Fahrzeug (100) und der Infrastrukturanlage (112), und/oder (einseitig) initiiert durch (Laser-)Lichtsignal-Triggerung ausgelöst (getriggert) werden kann.

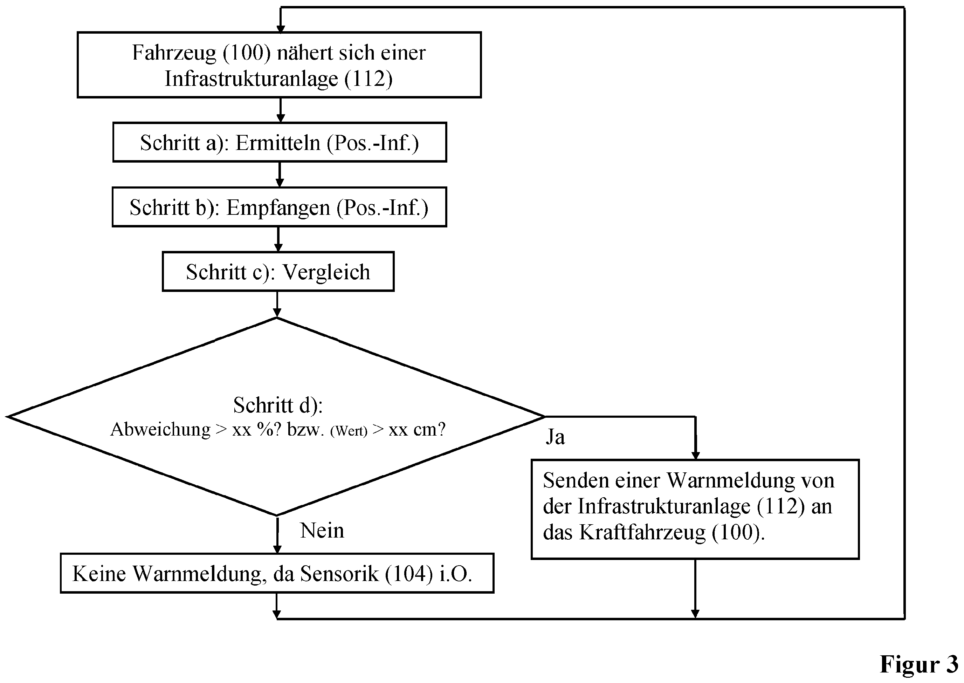

Die Figur 3 zeigt eine beispielhafte Darstellung an Verfahrensschritten bzgl. einer vergleichenden Auswertung seitens der Infrastrukturanlage. Wie aus der Figur 3 hierzu ersichtlich ist, werden beim Verfahren zum Überwachen einer Sensorik (104) eines Fahrzeugs (100) mittels Zuhilfenahme einer Infrastrukturanlage (112), seitens der Infrastrukturanlage (112) mindestens die folgenden Schritte umfassend ausgeführt:
Schritt a):
   Ermitteln einer Position des Fahrzeugs (100), relativ zum aktuell befahrenen Fahrstreifen (1a, 2a, 3a, 1b, 2b, 3b) einer mehrspurigen Fahrbahn (10), mittels Zuhilfenahme von Mitteln (112.2, 112.3) der Infrastrukturanlage (112);
Schritt b):
   Empfangen einer Positionsinformation des Fahrzeugs (100) vom Fahrzeug (100) oder von einer Komponente des Fahrzeugs (100), basierend auf der Sensorik (104) des Fahrzeugs (100), welche die ermittelte Position des Fahrzeugs (100) relativ zum aktuell befahrenen Fahrstreifen (1a, 2a, 3a, 1b, 2b, 3b) einer mehrspurigen Fahrbahn (10) beschreibt;
Schritt c):
   Bestimmen einer möglichen Abweichung (a) der Position des Fahrzeugs (100), durch vergleichende Auswertung
   - der ermittelten Position des Fahrzeugs (100) mittels Mitteln (112.2, 112.3) der Infrastrukturanlage (112), gegenüber
   - der ermittelten Position des Fahrzeugs (100) mittels der Sensorik (104) des Fahrzeugs (100);
Schritt d):
   wobei im Schritt des Bestimmens einer möglichen Abweichung (a) der Position des Fahrzeugs (100), im Falle einer Erkennung einer Abweichung (a) größer eines vorgegebenen und/oder vorgebbaren Wertes (w),
      - als Reaktion bei einer Abweichung (a) größer eines vorgegebenen und/oder vorgebbaren Wertes (w),
      - eine Warninformation von der Infrastrukturanlage (112) an das Fahrzeug (100) gesendet wird.
   Sofern im Schritt d) keine Abweichung (a) größer eines vorgegebenen und/oder vorgebbaren Wertes (w) festgestellt wird, erfolgt keine Warnmeldung, da die Sensorik (104) des Fahrzeugs (100) offensichtlich korrekt funktioniert.

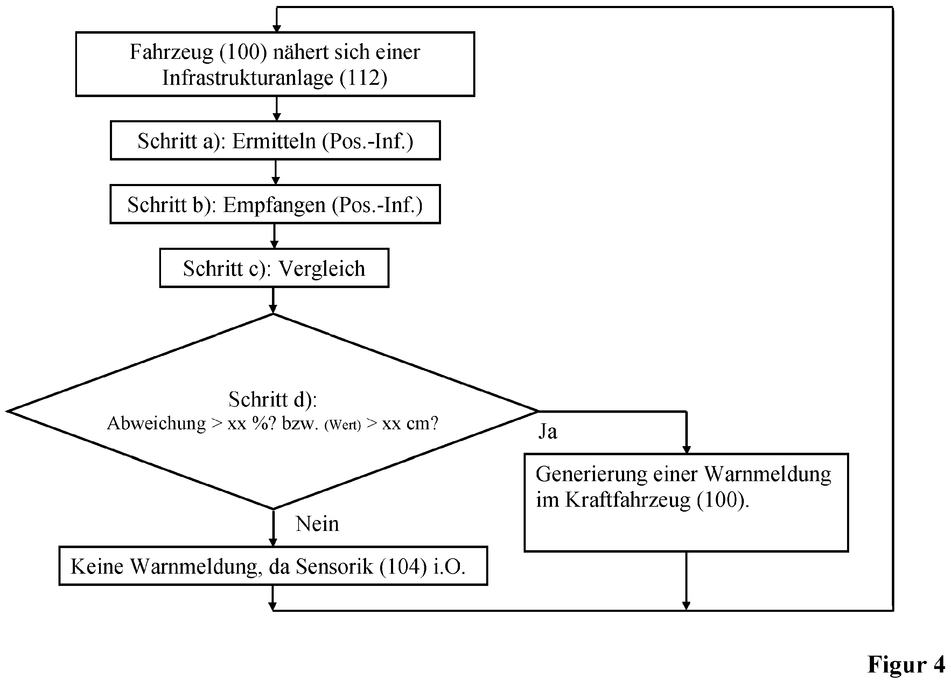

Die Figur 4 zeigt eine beispielhafte Darstellung an Verfahrensschritten bzgl. einer vergleichenden Auswertung seitens des Kraftfahrzeuges. Wie aus der Figur 4 hierzu ersichtlich ist, werden beim Verfahren zum Überwachen einer Sensorik (104) eines Fahrzeugs (100) mittels Zuhilfenahme einer Infrastrukturanlage (112), seitens des Fahrzeugs (100) mindestens die folgenden Schritte umfassend ausgeführt:
Schritt a):
   Ermitteln einer Position des Fahrzeugs (100), relativ zum aktuell befahrenen Fahrstreifen (1a, 2a, 3a, 1b, 2b, 3b) einer mehrspurigen Fahrbahn (10), mittels der Sensorik (104) des Fahrzeugs (100);
Schritt b):
   Empfangen einer Positionsinformation des Fahrzeugs (100) von der Infrastrukturanlage (112), basierend mittels Zuhilfenahme von Mitteln (112.2, 112.3) der Infrastrukturanlage (112), welche die ermittelte Position des Fahrzeugs (100) relativ zum aktuell befahrenen Fahrstreifen (1a, 2a, 3a, 1b, 2b, 3b) einer mehrspurigen Fahrbahn (10) beschreibt;
Schritt c):
   Bestimmen einer möglichen Abweichung (a) der Position des Fahrzeugs (100), durch vergleichende Auswertung
   - der ermittelten Position des Fahrzeugs (100) mittels Mitteln (112.2, 112.3) der Infrastrukturanlage (112), gegenüber
   - der ermittelten Position des Fahrzeugs (100) mittels der Sensorik (104) des Fahrzeugs (100);
Schritt d):
   wobei im Schritt des Bestimmens einer möglichen Abweichung (a) der Position des Fahrzeugs (100), im Falle einer Erkennung einer Abweichung (a) größer eines vorgegebenen und/oder vorgebbaren Wertes (w),
      - als Reaktion bei einer Abweichung (a) größer eines vorgegebenen und/oder vorgebbaren Wertes (w),
      - eine Warninformation im Fahrzeug (100) generiert wird.
   Sofern im Schritt d) keine Abweichung (a) größer eines vorgegebenen und/oder vorgebbaren Wertes (w) festgestellt wird, erfolgt keine Warnmeldung, da die Sensorik (104) des Fahrzeugs (100) offensichtlich korrekt funktioniert.

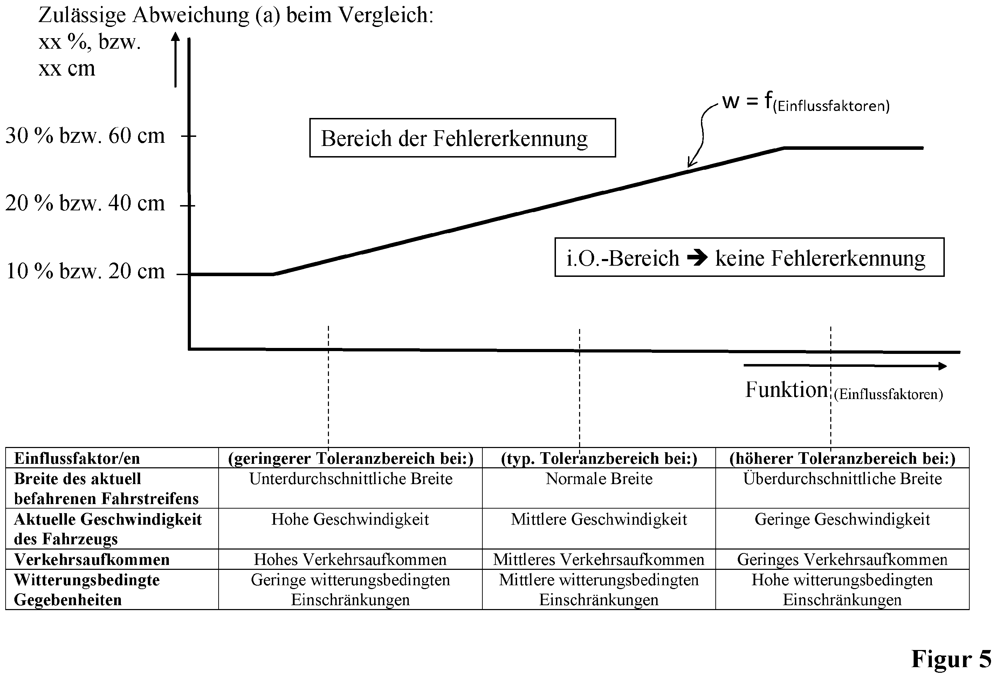

Die Figur 5 zeigt eine schematische Darstellung bezüglich des Betrags des vorgegebenen und/oder vorgebbaren Wertes, welcher mittels einer Auswahl einer Funktion bzw. Kombination an Funktionen gebildet wird. Wie aus der Figur 5 hierzu ersichtlich ist, befinden sich auf der x-Achse die möglichen Einflussfaktoren, mittels diesen die Funktion zur Bestimmung der zulässigen Abweichung (a) beim Vergleich der ermittelten Positionen des Fahrzeugs (100) relativ zum Fahrstreifen, als Einflussgrößen entsprechend berücksichtigt werden.

Wie aus der Figur 5 hierzu weiter ersichtlich ist, sind als Einflussfaktoren nachfolgende Beispiele aufgeführt:
- die breite des aktuell befahrenen Fahrstreifens:
   ∘ ob eine unterdurchschnittliche Breite (b) vorliegt,
   ∘ ob eine normale Breite (b) vorliegt,
   ∘ ob eine überdurchschnittliche Breite (b) vorliegt;
- die aktuelle Geschwindigkeit des Kraftfahrzeugs (100):
   ∘ ob eine hohe Geschwindigkeit des Fahrzeugs vorliegt,
   ∘ ob eine mittlere Geschwindigkeit des Fahrzeugs vorliegt,
   ∘ ob eine geringe Geschwindigkeit des Fahrzeugs vorliegt;
- das Verkehrsaufkommen:
   ∘ ob ein hohes Verkehrsaufkommen vorliegt,
   ∘ ob ein mittleres Verkehrsaufkommen vorliegt,
   ∘ ob ein geringes Verkehrsaufkommen vorliegt;
- die witterungsbedingten Gegebenheiten:
   ∘ ob geringe witterungsbedingte Einschränkungen vorliegen,
   ∘ ob mittlere witterungsbedingte Einschränkungen vorliegen,
   ∘ ob hohe witterungsbedingte Einschränkungen vorliegen;

Wie aus der Figur 5 weiter ersichtlich ist, befindet sich auf der y-Achse die zulässige Abweichung (a) beim Vergleich der ermittelten Positionen des Fahrzeugs (100) relativ zum Fahrstreifen. Wie aus der Figur 5 weiter ersichtlich ist, ergibt sich als Resultat ein Funktionsverlauf (w) der zulässigen Abweichung (a) beim Vergleich der ermittelten Positionen des Fahrzeugs (100) relativ zum Fahrstreifen, wobei der Funktionsverlauf (w) eine Funktion der Einflussgrößen ist. Der gezeigte Funktionsverlauf ist hierbei nur beispielhaft, und kann auch einen anderen (nicht-linearen) Funktionsverlauf annehmen. Ebenso sind die gezeigten Zahlenwerte bzw. Prozentangaben nur beispielhaft.

Wie das Beispiel der Figur 5 zeigt, beginnt die Funktion bezüglich der zulässigen Abweichung (a) beim Vergleich der ermittelten Positionen des Fahrzeugs (100) im unteren Bereich mit einer waagrechten Geraden, welche als zulässige Abweichung 10% bzw. 20 cm zulässt. Im weiteren Verlauf der Funktion steigt die zulässige Abweichung (a) beim Vergleich der ermittelten Positionen des Fahrzeugs (100) an, und geht im oberen Bereich wieder in eine mit einer waagrechten Geraden, welche als zulässige Abweichung 30% bzw. 60 cm zulässt. Wie aus der Figur 5 weiter ersichtlich ist, ist der Bereich oberhalb der beschriebenen resultieren Funktionskennlinie (w) der Bereich, bei diesem ein Fehler erkannt wird, bzw. eine Warnmeldung generiert wird, wenn beim Vergleich der ermittelten Positionen des Fahrzeugs (100) die Abweichung / Differenz der/die Wert/e die resultiere Funktionskennlinie (w) überschreiten. Wie aus der Figur 5 weiter ersichtlich ist, ist der Bereich unterhalb der beschriebenen resultieren Funktionskennlinie (w) der Bereich, bei diesem kein Fehler erkannt wird, bzw. keine Warnmeldung generiert wird, wenn beim Vergleich der ermittelten Positionen des Fahrzeugs (100) die Abweichung / Differenz der/die Wert/e die resultiere Funktionskennlinie (w) nicht überschreiten.

Wie bereits oben ausgeführt, werden beim Vergleich der ermittelten Positionen des Fahrzeugs (100) immer korrelierende Werte miteinander verglichen, welche sich auf ein bestimmtes Fahrzeug (100) beziehen, welches einen (bestimmten) Fahrstreifen an einer bestimmten Position des Fahrstreifens befährt, und die beiden Messergebnisse von der Sensorik (104) des Fahrzeugs (100), und von den Mitteln (112.2, 112.3) der Infrastrukturanlage (112) stammend sind.

### Bezugszeichenliste:

- 10: mehrspurigen Fahrbahn
- 100: Fahrzeug / Kraftfahrzeug
- 104: Sensorik
- 104.1: Erfassungsbereich der Sensorik
- 112: Infrastrukturanlage (z.B. TraffiTower)
- 112.2: Mittel der Infrastrukturanlage (z.B. Sensorik)
- 112.2.1: Erfassungsbereich der Sensorik (112.2)
- 112.3: Mittel der Infrastrukturanlage (z.B. Sensorik)
- 112.3.1: Erfassungsbereich der Sensorik (112.3)
- car-to-i: Kommunikation zwischen Kraftfahrzeug und Infrastruktur
- b: Breite des Fahrstreifens (= 1, b)
- b/2: 50% der Breite des Fahrstreifens
- 0,4 b: 40% der Breite des Fahrstreifens
- 0,6 b: 60% der Breite des Fahrstreifens
- a: Abweichung
- w: Vorgegebener und/oder vorgebbarer Wert (xx %; xx cm)
- w: Entspricht einer Funktion _{(Einflussfaktoren)}
- f: Funktion (abhängig von den Einflussfaktoren)
- 1a: Erster Fahrstreifen einer mehrspurigen Fahrbahn (10)
- 2a: Zweiter Fahrstreifen einer mehrspurigen Fahrbahn (10)
- 3a: Dritter Fahrstreifen einer mehrspurigen Fahrbahn (10)
- 1b: Erster Fahrstreifen einer mehrspurigen Fahrbahn (10)
- 2b: Zweiter Fahrstreifen einer mehrspurigen Fahrbahn (10)
- 3b: Dritter Fahrstreifen einer mehrspurigen Fahrbahn (10)

## Patentansprüche

1. Verfahren zum Überwachen einer Sensorik (104) eines Fahrzeugs (100) mittels Zuhilfenahme einer Infrastrukturanlage (112), wobei das Verfahren seitens der Infrastrukturanlage (112) mindestens die folgenden Schritte umfasst:
a) Ermitteln einer Position des Fahrzeugs (100), relativ zum aktuell befahrenen Fahrstreifen (1a, 2a, 3a, 1b, 2b, 3b) einer mehrspurigen Fahrbahn (10), mittels Zuhilfenahme von Mitteln (112.2, 112.3) der Infrastrukturanlage (112); und
b) Empfangen einer Positionsinformation des Fahrzeugs (100) vom Fahrzeug (100) oder von einer Komponente des Fahrzeugs (100), basierend auf der Sensorik (104) des Fahrzeugs (100), welche die ermittelte Position des Fahrzeugs (100) relativ zum aktuell befahrenen Fahrstreifen (1a, 2a, 3a, 1b, 2b, 3b) einer mehrspurigen Fahrbahn (10) beschreibt; und
c) Bestimmen einer möglichen Abweichung (a) der Position des Fahrzeugs (100), durch vergleichende Auswertung
- der ermittelten Position des Fahrzeugs (100) mittels Mitteln (112.2, 112.3) der Infrastrukturanlage (112), gegenüber
- der ermittelten Position des Fahrzeugs (100) mittels der Sensorik (104) des Fahrzeugs (100);
d) wobei im Schritt des Bestimmens einer möglichen Abweichung (a) der Position des Fahrzeugs (100), im Falle einer Erkennung einer Abweichung (a) größer eines vorgegebenen und/oder vorgebbaren Wertes (w),
- als Reaktion bei einer Abweichung (a) größer eines vorgegebenen und/oder vorgebbaren Wertes (w),
- eine Warninformation von der Infrastrukturanlage (112) an das Fahrzeug (100) gesendet wird.

2. Verfahren zum Überwachen einer Sensorik (104) eines Fahrzeugs (100) mittels Zuhilfenahme einer Infrastrukturanlage (112), wobei das Verfahren seitens des Fahrzeugs (100) mindestens die folgenden Schritte umfasst:
a) Ermitteln einer Position des Fahrzeugs (100), relativ zum aktuell befahrenen Fahrstreifen (1a, 2a, 3a, 1b, 2b, 3b) einer mehrspurigen Fahrbahn (10), mittels der Sensorik (104) des Fahrzeugs (100); und
b) Empfangen einer Positionsinformation des Fahrzeugs (100) von der Infrastrukturanlage (112), basierend mittels Zuhilfenahme von Mitteln (112.2, 112.3) der Infrastrukturanlage (112), welche die ermittelte Position des Fahrzeugs (100) relativ zum aktuell befahrenen Fahrstreifen (1a, 2a, 3a, 1b, 2b, 3b) einer mehrspurigen Fahrbahn (10) beschreibt; und
c) Bestimmen einer möglichen Abweichung (a) der Position des Fahrzeugs (100), durch vergleichende Auswertung
- der ermittelten Position des Fahrzeugs (100) mittels Mitteln (112.2, 112.3) der Infrastrukturanlage (112), gegenüber
- der ermittelten Position des Fahrzeugs (100) mittels der Sensorik (104) des Fahrzeugs (100);
d) wobei im Schritt des Bestimmens einer möglichen Abweichung (a) der Position des Fahrzeugs (100), im Falle einer Erkennung einer Abweichung (a) größer eines vorgegebenen und/oder vorgebbaren Wertes (w),
- als Reaktion bei einer Abweichung (a) größer eines vorgegebenen und/oder vorgebbaren Wertes (w),
- eine Warninformation im Fahrzeug (100) generiert wird.

3. Verfahren nach Anspruch 1 oder 2, **dadurch gekennzeichnet, dass** im Schritt des Bestimmens einer möglichen Abweichung (a) der Position des Fahrzeugs (100), hinsichtlich der Abweichung (a) größer eines vorgegebenen und/oder vorgebbaren Wertes (w), der Betrag des vorgegebenen und/oder vorgebbaren Wertes (w) mittels einer Funktion (f) von der Breite (b) des aktuell befahrenen Fahrstreifens (1a, 2a, 3a, 1b, 2b, 3b) einer mehrspurigen Fahrbahn (10) gebildet wird.

4. Verfahren nach Anspruch 1 oder 2, **dadurch gekennzeichnet, dass** im Schritt des Bestimmens einer möglichen Abweichung (a) der Position des Fahrzeugs (100), hinsichtlich der Abweichung (a) größer eines vorgegebenen und/oder vorgebbaren Wertes (w), der Betrag des vorgegebenen und/oder vorgebbaren Wertes (w) mittels einer Funktion (f) von der aktuellen Geschwindigkeit des Fahrzeugs (100) gebildet wird.

5. Verfahren nach Anspruch 1 oder 2, **dadurch gekennzeichnet, dass** im Schritt des Bestimmens einer möglichen Abweichung (a) der Position des Fahrzeugs (100), hinsichtlich der Abweichung (a) größer eines vorgegebenen und/oder vorgebbaren Wertes (w), der Betrag des vorgegebenen und/oder vorgebbaren Wertes (w) mittels einer Funktion (f) von dem aktuellen Verkehrsaufkommen des aktuell befahrenen Fahrstreifens (1a, 2a, 3a, 1b, 2b, 3b) und dessen angrenzenden Fahrstreifen (1a, 2a, 3a, 1b, 2b, 3b) einer mehrspurigen Fahrbahn (10) gebildet wird.

6. Verfahren nach Anspruch 1 oder 2, **dadurch gekennzeichnet, dass** im Schritt des Bestimmens einer möglichen Abweichung (a) der Position des Fahrzeugs (100), hinsichtlich der Abweichung (a) größer eines vorgegebenen und/oder vorgebbaren Wertes (w), der Betrag des vorgegebenen und/oder vorgebbaren Wertes (w) mittels einer Funktion (f) von den aktuellen witterungsbedingten Gegebenheiten gebildet wird.

7. Verfahren nach einem der Ansprüche 1 bis 6, **dadurch gekennzeichnet, dass** im Schritt des Bestimmens einer möglichen Abweichung (a) der Position des Fahrzeugs (100), hinsichtlich der Abweichung (a) größer eines vorgegebenen und/oder vorgebbaren Wertes (w), der Betrag des vorgegebenen und/oder vorgebbaren Wertes (w) mittels einer Funktion (f) einer Kombination von zwei oder mehreren Merkmalen der Ansprüche 3 bis 6 gebildet wird.

8. Verfahren nach einem der Ansprüche 1 bis 7, **dadurch gekennzeichnet, dass** im Schritt des Bestimmens einer möglichen Abweichung (a) der Position des Fahrzeugs (100), hinsichtlich der Abweichung (a) größer eines vorgegebenen und/oder vorgebbaren Wertes (w), der Betrag des vorgegebenen und/oder vorgebbaren Wertes (w), dieser
- als relativer Wert (xx %) zur Breite (b) des aktuell befahrenen Fahrstreifens (1a, 2a, 3a, 1b, 2b, 3b) einer mehrspurigen Fahrbahn (10) gebildet wird, und/oder
- als absoluter Wert (xx cm) zur Breite (b) des aktuell befahrenen Fahrstreifens (1a, 2a, 3a, 1b, 2b, 3b) einer mehrspurigen Fahrbahn (10) gebildet wird.

9. Infrastrukturanlage (112), ausgebildet zur Durchführung eines Verfahrens gemäß einem der Ansprüche 1 und/oder 3 bis 8.

10. Kraftfahrzeug (100), ausgebildet zur Durchführung eines Verfahrens gemäß einem der Ansprüche 2 bis 8.

## Claims

1. Method for monitoring a sensor system (104) of a vehicle (100) with the aid of an infrastructure unit (112), wherein the method comprises at least the following steps on the part of the infrastructure unit (112) :
a) ascertaining a position of the vehicle (100), relative to the currently traveled lane (1a, 2a, 3a, 1b, 2b, 3b) of a multilane roadway (10), with the aid of means (112.2, 112.3) of the infrastructure unit (112);
b) receiving position information of the vehicle (100) from the vehicle (100) or from a component of the vehicle (100), based on the sensor system (104) of the vehicle (100), which describes the ascertained position of the vehicle (100) relative to the currently traveled lane (1a, 2a, 3a, 1b, 2b, 3b) of a multilane roadway (10); and
c) determining a possible deviation (a) of the position of the vehicle (100), by comparative evaluation
- of the ascertained position of the vehicle (100) by means of means (112.2, 112.3) of the infrastructure unit (112) in relation to
- the ascertained position of the vehicle (100) by means of the sensory system (104) of the vehicle (100);
d) wherein in the step of determining a possible deviation (a) of the position of the vehicle (100), in case of a recognition of a deviation (a) greater than a specified and/or specifiable value (w),
- as a reaction upon a deviation (a) greater than a specified and/or specifiable value (w)
- warning information is sent from the infrastructure unit (112) to the vehicle (100).

2. Method for monitoring a sensor system (104) of a vehicle (100) with the aid of an infrastructure unit (112), wherein the method comprises at least the following steps on the part of the vehicle (100):
a) ascertaining a position of the vehicle (100), relative to the currently traveled lane (1a, 2a, 3a, 1b, 2b, 3b) of a multilane roadway (10), by means of the sensor system (104) of the vehicle (100);
b) receiving position information of the vehicle (100) from the infrastructure unit (112) with the aid of means (112.2, 112.3) of the infrastructure unit (112), which describes the ascertained position of the vehicle (100) relative to the currently traveled lane (1a, 2a, 3a, 1b, 2b, 3b) of a multilane roadway (10); and
c) determining a possible deviation (a) of the position of the vehicle (100), by comparative evaluation
- of the ascertained position of the vehicle (100) by means of means (112.2, 112.3) of the infrastructure unit (112) in relation to
- the ascertained position of the vehicle (100) by means of the sensor system (104) of the vehicle (100);
d) wherein in the step of determining a possible deviation (a) of the position of the vehicle (100), in case of a recognition of a deviation (a) greater than a specified and/or specifiable value (w),
- as a reaction upon a deviation (a) greater than a specified and/or specifiable value (w)
- warning information is generated in the vehicle (100).

3. Method according to Claim 1 or 2, **characterized in that**, in the step of determining a possible deviation (a) of the position of the vehicle (100), with respect to the deviation (a) greater than a specified and/or specifiable value (w), the absolute value of the specified and/or specifiable value (w) is formed by means of a function (f) from the width (b) of the currently traveled lane (1a, 2a, 3a, 1b, 2b, 3b) of a multilane roadway (10).

4. Method according to Claim 1 or 2, **characterized in that**, in the step of determining a possible deviation (a) of the position of the vehicle (100), with respect to the deviation (a) greater than a specified and/or specifiable value (w), the absolute value of the specified and/or specifiable value (w) is formed by means of a function (f) from the current speed of the vehicle (100).

5. Method according to Claim 1 or 2, **characterized in that**, in the step of determining a possible deviation (a) of the position of the vehicle (100), with respect to the deviation (a) greater than a specified and/or specifiable value (w), the absolute value of the specified and/or specifiable value (w) is formed by means of a function (f) from the current traffic volume of the currently traveled lane (1a, 2a, 3a, 1b, 2b, 3b) and its adjoining lanes (1a, 2a, 3a, 1b, 2b, 3b) of a multilane roadway (10).

6. Method according to Claim 1 or 2, **characterized in that**, in the step of determining a possible deviation (a) of the position of the vehicle (100), with respect to the deviation (a) greater than a specified and/or specifiable value (w), the absolute value of the specified and/or specifiable value (w) is formed by means of a function (f) from the current weather-related conditions.

7. Method according to any one of Claims 1 to 6, **characterized in that**, in the step of determining a possible deviation (a) of the position of the vehicle (100), with respect to the deviation (a) greater than a specified and/or specifiable value (w), the absolute value of the specified and/or specifiable value (w) is formed by means of a function (f) of a combination of two or more features of claims 3 to 6.

8. Method according to any one of Claims 1 to 7, **characterized in that**, in the step of determining a possible deviation (a) of the position of the vehicle (100), with respect to the deviation (a) greater than a specified and/or specifiable value (w), the absolute value of the specified and/or specifiable value (w)
- is formed as a relative value (xx %) in relation to the width (b) of the currently traveled lane (1a, 2a, 3a, 1b, 2b, 3b) of a multilane roadway (10) and/or
- is formed as an absolute value (xx cm) in relation to the width (b) of the currently traveled lane (1a, 2a, 3a, 1b, 2b, 3b) of a multilane roadway (10).

9. Infrastructure unit (112) designed to carry out a method according to any one of Claims 1 and/or 3 to 8.

10. Motor vehicle (100) designed to carry out a method according to any one of Claims 2 to 8.

## Revendications

1. Procédé de surveillance d'un système de capteur (104) d'un véhicule (100) à l'aide d'un système d'infrastructure (112), le procédé comprenant au moins les étapes suivantes du côté du système d'infrastructure (112) :
a) identification d'une position du véhicule (100) par rapport à la voie de circulation (1a, 2a, 3a, 1b, 2b, 3b) actuellement parcourue d'une route à voies multiples (10) à l'aide de moyens (112.2, 112.3) du système d'infrastructure (112) ; et
b) réception d'informations de position du véhicule (100) en provenance du véhicule (100) ou en provenance d'un composant du véhicule (100), sur la base du système de capteur (104) du véhicule (100), lesquelles décrivent la position identifiée du véhicule (100) par rapport à la voie de circulation (1a, 2a, 3a, 1b, 2b, 3b) actuellement parcourue d'une route à voies multiples (10) ; et
c) détermination d'un écart (a) possible de la position du véhicule (100) par évaluation comparative
- de la position identifiée du véhicule (100) à l'aide de moyens (112.2, 112.3) du système d'infrastructure (112), par rapport à
- la position identifiée du véhicule (100) à l'aide du dispositif de capteur (104) du véhicule (100) ;
d) à l'étape de la détermination d'un écart (a) possible de la position du véhicule (100), en cas de reconnaissance d'un écart (a) supérieur à une valeur (w) prédéfinie et/ou pouvant être prédéfinie,
- en réaction dans le cas d'un écart (a) supérieur à une valeur (w) prédéfinie et/ou pouvant être prédéfinie,
- des informations d'alerte étant envoyées par le système d'infrastructure (112) au véhicule (100).

2. Procédé de surveillance d'un système de capteur (104) d'un véhicule (100) à l'aide d'un système d'infrastructure (112), le procédé comprenant au moins les étapes suivantes du côté du véhicule (100) :
a) identification d'une position du véhicule (100) par rapport à la voie de circulation (1a, 2a, 3a, 1b, 2b, 3b) actuellement parcourue d'une route à voies multiples (10) à l'aide du système de capteur (104) du véhicule (100) ; et
b) réception d'informations de position du véhicule (100) en provenance du système d'infrastructure (112), en se basant sur l'aide de moyens (112.2, 112.3) du système d'infrastructure (112), lesquelles décrivent la position identifiée du véhicule (100) par rapport à la voie de circulation (1a, 2a, 3a, 1b, 2b, 3b) actuellement parcourue d'une route à voies multiples (10) ; et
c) détermination d'un écart (a) possible de la position du véhicule (100) par évaluation comparative
- de la position identifiée du véhicule (100) à l'aide de moyens (112.2, 112.3) du système d'infrastructure (112), par rapport à
- la position identifiée du véhicule (100) à l'aide du dispositif de capteur (104) du véhicule (100) ;
d) à l'étape de la détermination d'un écart (a) possible de la position du véhicule (100), en cas de reconnaissance d'un écart (a) supérieur à une valeur (w) prédéfinie et/ou pouvant être prédéfinie,
- en réaction dans le cas d'un écart (a) supérieur à une valeur (w) prédéfinie et/ou pouvant être prédéfinie,
- des informations d'alerte étant générées dans le véhicule (100).

3. Procédé selon la revendication 1 ou 2, **caractérisé en ce que**, dans l'étape de détermination d'un écart (a) possible de la position du véhicule (100), en ce qui concerne l'écart (a) supérieur à une valeur (w) prédéfinie et/ou pouvant être prédéfinie, le montant de la valeur (w) prédéfinie et/ou pouvant être prédéfinie est formé au moyen d'une fonction (f) de la largeur (b) de la voie de circulation (1a, 2a, 3a, 1b, 2b, 3b) actuellement parcourue d'une route à voies multiples (10).

4. Procédé selon la revendication 1 ou 2, **caractérisé en ce que**, dans l'étape de détermination d'un écart (a) possible de la position du véhicule (100), en ce qui concerne l'écart (a) supérieur à une valeur (w) prédéfinie et/ou pouvant être prédéfinie, le montant de la valeur (w) prédéfinie et/ou pouvant être prédéfinie est formé au moyen d'une fonction (f) de la vitesse actuelle du véhicule (100).

5. Procédé selon la revendication 1 ou 2, **caractérisé en ce que**, dans l'étape de détermination d'un écart (a) possible de la position du véhicule (100), en ce qui concerne l'écart (a) supérieur à une valeur (w) prédéfinie et/ou pouvant être prédéfinie, le montant de la valeur (w) prédéfinie et/ou pouvant être prédéfinie est formé au moyen d'une fonction (f) du volume de trafic actuel de la voie de circulation (1a, 2a, 3a, 1b, 2b, 3b) actuellement parcourue et de ses voies de circulation (1a, 2a, 3a, 1b, 2b, 3b) adjacentes d'une route à voies multiples (10).

6. Procédé selon la revendication 1 ou 2, **caractérisé en ce que**, dans l'étape de détermination d'un écart (a) possible de la position du véhicule (100), en ce qui concerne l'écart (a) supérieur à une valeur (w) prédéfinie et/ou pouvant être prédéfinie, le montant de la valeur (w) prédéfinie et/ou pouvant être prédéfinie est formé au moyen d'une fonction (f) des conditions météorologiques actuelles.

7. Procédé selon l'une des revendications 1 à 6, **caractérisé en ce que**, dans l'étape de détermination d'un écart (a) possible de la position du véhicule (100), en ce qui concerne l'écart (a) supérieur à une valeur (w) prédéfinie et/ou pouvant être prédéfinie, le montant de la valeur (w) prédéfinie et/ou pouvant être prédéfinie est formé au moyen d'une fonction (f) d'une combinaison de deux caractéristiques ou plus des revendications 3 à 6.

8. Procédé selon l'une des revendications 1 à 7, **caractérisé en ce que**, dans l'étape de détermination d'un écart (a) possible de la position du véhicule (100), en ce qui concerne l'écart (a) supérieur à une valeur (w) prédéfinie et/ou pouvant être prédéfinie, le montant de la valeur (w) prédéfinie et/ou pouvant être prédéfinie
- est formé en tant que valeur relative (xx %) de la largeur (b) de la voie de circulation (1a, 2a, 3a, 1b, 2b, 3b) actuellement parcourue d'une route à voies multiples (10), et/ou
- est formé en tant que valeur absolue (xx cm) de la largeur (b) de la voie de circulation (1a, 2a, 3a, 1b, 2b, 3b) actuellement parcourue d'une route à voies multiples (10).

9. Système d'infrastructure (112), configuré pour mettre en œuvre un procédé selon l'une des revendications 1 et/ou 3 à 8.

10. Système d'infrastructure (100), configuré pour mettre en œuvre un procédé selon l'une des revendications 2 à 8.
